(19) Europäisches Patentamt
European Patent Office
Office européen des brevets

(11) Veröffentlichungsnummer : **0 518 324 B1**

(12) # EUROPÄISCHE PATENTSCHRIFT

(45) Veröffentlichungstag der Patentschrift :
**16.03.94 Patentblatt 94/11**

(51) Int. Cl.$^5$ : **C04B 41/49**

(21) Anmeldenummer : **92109839.8**

(22) Anmeldetag : **11.06.92**

(54) **Verfahren zur wasserabweisenden Imprägnierung von Mauerwerk.**

(30) Priorität : **13.06.91 DE 4119562**

(43) Veröffentlichungstag der Anmeldung :
**16.12.92 Patentblatt 92/51**

(45) Bekanntmachung des Hinweises auf die Patenterteilung :
**16.03.94 Patentblatt 94/11**

(84) Benannte Vertragsstaaten :
**AT BE CH DE ES FR GB IT LI NL SE**

(56) Entgegenhaltungen :
**EP-A- 0 186 847**
**EP-A- 0 242 798**
**GB-A- 1 374 611**

(73) Patentinhaber : **WACKER-CHEMIE GMBH**
**Hanns-Seidel-Platz 4**
**D-81737 München (DE)**

(72) Erfinder : **Roth, Michael, Dr.**
**Orffstrasse 11**
**W-8263 Burghausen (DE)**
Erfinder : **Bernbacher, Rosalia**
**Michaelistrasse 32**
**A-5280 Braunau am Inn (AT)**

**EP 0 518 324 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur wasserabweisenden Imprägnierung von Mauerwerk durch Behandeln des Mauerwerks mit einer hochdispersen, mit Wasser verdünnten, imprägnierenden Zusammensetzung, die (A1) Organoalkoxysilan und/oder (A2) Alkoxygruppen enthaltendes Organosiloxan und (B) ein Salz von wasserlöslicher Säure und Organopolysiloxan mit über SiC-gebundenen Resten mit basischem Stickstoff umfaßt. Ein derartiges Verfahren ist gemäß EP-A-242 798 bekannt.

Als Injektionsmittel zur Bekämpfung der aufsteigenden Feuchtigkeit in Mauerwerken werden Alkalialkylsiliconate, Alkalisilikate, deren Gemische und in organischen Lösungsmitteln oder in Wasser gelöste alkoxygruppenhaltige siliciumorganische Verbindungen oder wässrige Dispersionen alkoxygruppenhaltiger siliciumorganischer Verbindungen verwendet.

Im Merkblatt 1-86, herausgegeben vom Referat Mauerentfeuchtung des Wissenschaftlich-Technischen Arbeitskreises für Denkmalpflege und Bauwerksanierung e.V., München wird empfohlen, die Bohrlöcher vor dem Einbringen der in Wasser gelösten Präparate, wie Alkalialkylsiliconate, Alkalisilikate und Silane mit z.B. Kalkwasser vorzuspülen. Diese in den Injektionsmitteln vorhandenen, in Wasser gelösten Wirkstoffe werden dabei durch die in die Mauer eingebrachten Calciumionen ausgefällt und gelieren.

Bei der Verwendung von in Wasser gelösten Alkalialkylsiliconaten, gegebenenfalls wie in der GB-A-1,177,662 (C.T. Kyte; ausgegeben am 14.1.1970 für Gallwey Chemical Co. Ltd., Marlow, Großbritannien) in Kombination mit Alkalisilikat beschrieben, entstehen im Mauerwerk wasserlösliche, hygroskopische, ausblühfähige Carbonate. Bei dicken Mauerwerken ist ferner der zur Wirkstoffbildung erforderliche Zutritt von $CO_2$ aus der Luft sehr erschwert.

Die als Wirkstoff in Injektionsmitteln zur Bekämpfung der aufsteigenden Feuchtigkeit in Mauerwerken geeigneten wasserlöslichen Silane, wie Methylsilan-tris-methylglykolat sind gesundheitsschädlich und können teilweise Mißbildungen verursachen.

In der GB-A-1 374 611 (J.G. Coombs Price; ausgegeben am 20.11.1974 für Dow Corning Ltd., London) ist ein Verfahren zur Bildung einer dampfdichten Sperre in Mauerwerken beschrieben, bei dem in organischen Lösungsmitteln gelöste alkoxygruppenhaltige siliciumorganische Verbindungen durch Löcher in das Mauerwerk eingebracht werden. Die Verwendung von Lösungsmitteln ist jedoch mit Brandgefährdung und Umweltbelastung, insbesondere in bewohnten Gebäuden, verbunden.

In der US-A-4,661,551 (H. Mayer et al.; ausgegeben am 28. 4.1987 für Wacker-Chemie GmbH, München) wird die Verwendung einer hochdispersen, mit Wasser verdünnten Zusammensetzung aus Isooctyltrimethoxysilan, einem Salz von wasserlöslicher Säure und stickstoffhaltigem Organopolysiloxan, n-Hexanol und Eisessig zur Bildung einer Sperre gegenüber in einer Backsteinmauer aufsteigender Feuchtigkeit beschrieben. Diese Zusammensetzung verteilt sich schnell im feuchten Mauerwerk und bildet durch die Reaktion mit dem Mauerwerk eine Sperre, die das Aufsteigen von weiterem Wasser verhindert.

Jedoch entfaltet diese Zusammensetzung eine schlechte Wirkung, wenn das Mauerwerk alt ist.

Der vorliegenden Erfindung liegt die Aufgabe zugrunde, ein gesundheitlich unbedenkliches Verfahren zur wasserabweisenden Imprägnierung von Mauerwerk bereitzustellen, bei dem mit Wasser verdünnte Zusammensetzungen verwendet werden und das auch altes Mauerwerk gut und zuverlässig imprägniert.

Die Erfindung betrifft ein Verfahren zur wasserabweisenden Imprägnierung von Mauerwerk durch Behandeln des Mauerwerks mit einer hochdispersen, mit Wasser verdünnten, imprägnierenden Zusammensetzung, die (A1) Organoalkoxysilan und/oder (A2) Alkoxygruppen enthaltendes Organosiloxan und (B) Salz von wasserlöslicher organischer oder anorganischer Säure und Organopolysiloxan umfaßt, das zusätzlich zu anderen Organosiloxaneinheiten solche Siloxaneinheiten enthält, die einwertige, über SiC-gebundene Reste mit basischem Stickstoff in Mengen von mindestens 0,5 Gew.-% basischem Stickstoff, bezogen auf das Gewicht des Organopolysiloxans, aufweisen, das dadurch gekennzeichnet ist, daß das Mauerwerk mit wäßrigen Alkali-oder Erdalkalihydroxidlösungen alkalisch gemacht wird.

Die Erfindung beruht auf der Entdeckung, daß die Wirkung der erfindungsgemäß verwendbaren verdünnten imprägnierenden Zusammensetzungen bei basischen Mauerwerken wesentlich erhöht ist. Alte Mauerwerke weisen jedoch meistens keine Basizität mehr auf.

In einem Mauerwerk wird eine wirksame Sperre gegen vom Boden her aufsteigende Feuchtigkeit gebildet, wenn sich die Wirkstoffe der imprägnierenden Zusammensetzung schnell im feuchten Mauerwerk verteilen und mit dem Mauerwerk reagieren, bevor der nach oben steigende Feuchtigkeitsstrom die Wirkstoffe zu sehr verdünnt oder die Wirkstoffe aus der Sperrzone ausschwemmt. Für eine schnelle Reaktion der erfindungsgemäß verwendeten Wirkstoffe ist ein alkalisches Milieu des Mauerwerks erforderlich.

Durch den erfindungsgemäß erhöhten Gehalt an Basen reagieren alte Mauerwerke mit den erfindungsgemäß verwendeten hochdispersen, mit Wasser verdünnten, imprägnierenden Zusammensetzungen ebenso schnell wie neue alkalische Mauerwerke, die noch nicht durch den $CO_2$-Gehalt der Atmosphäre neutralisiert

worden sind. Aber auch bei neuen Mauerwerken kann die Imprägnierung gegen Feuchtigkeit durch das erfindungsgemäße Verfahren verbessert werden.

Zum Alkalischmachen des Mauerwerks eignen sich alle starken anorganischen und organischen Basen, die in Wasser löslich sind und keine Gesundheitsgefährdung darstellen.

Das Mauerwerk wird jedoch vorzugsweise mit wässrigen Alkali- oder Erdalkalihydroxidlösungen alkalisch gemacht. Lithium-, Natrium-, Kalium-, Calcium-, Strontium- und Bariumhydroxidlösungen sind am besten geeignet. Besonders bevorzugt ist die Verwendung einer wässrigen Calciumhydroxidlösung zum Alkalischmachen des Mauerwerks, da überschüssiges Calciumhydroxid sich sehr gut mit dem Mauerwerk verbindet und sich durch den $CO_2$-Gehalt der Atmosphäre zu Kalk verfestigt.

Die Konzentrationen der wässrigen Alkali- und Erdalkalihydroxidlösungen liegen günstigerweise bei 0,01 bis 20 Gew.-%. Bei der Verwendung einer Calciumhydroxidlösung werden Konzentrationen von 0,05 Gew-% bis zur Sättigung bevorzugt.

Die wässrige alkalische Lösung kann vor oder nach dem Einbringen der imprägnierenden Zusammensetzungen in das Mauerwerk eingebracht werden. Vorzugsweise wird die wässrige alkalische Lösung jedoch vor der Injektion der imprägnierenden Zusammensetzung in das Mauerwerk eingebracht. Besonders günstig ist es, die wässrige alkalische Lösung 2 bis 3 Tage vorher einzubringen. Dabei wird die wässrige alkalische Lösung vorzugsweise über Bohrlöcher in das Mauerwerk eingebracht. Hierbei kann mit oder ohne Druck gearbeitet werden. Zweckmäßigerweise verwendet man die gleichen Bohrlöcher, durch die die imprägnierende Zusammensetzung eingebracht wird.

Das Alkalischmachen der imprägnierenden Zusammensetzungen vor dem Einbringen in das Mauerwerk kommt nicht in Frage, da die Dispersionen dadurch zerstört werden und (A1) Organoalkoxysilan und/oder (A2) Organosiloxan sich dann nicht schnell in dem Mauerwerk verteilen können.

Das erfindungsgemäße Verfahren eignet sich zur wasserabweisenden Imprägnierung von jeder Art von Mauerwerk, beispielsweise von Ziegelsteinen, bewehrtem und unbewehrtem Beton, Porenbeton, rheinischem Bims, Natursteinen einschließlich Kalksteinen, Gips, Schlackensteinen und Kalksandsteinen.

Das erfindungsgemäße Verfahren eignet sich besonders für die Tiefenimprägnierung von bereits durchfeuchtetem altem Mauerwerk. Bevorzugt wird das erfindungsgemäße Verfahren zur Bekämpfung von im Mauerwerk aufsteigender Feuchtigkeit eingesetzt. Dabei werden vorzugsweise Bohrlöcher dicht über dem Bodenniveau außen und innen in die Mauer gebohrt. In diese Bohrlöcher werden dann die imprägnierende Zusammensetzung und die wässrige alkalische Lösung eingebracht. Die Mauer kann an dieser Stelle völlig durchfeuchtet sein. Nach Abreagieren der imprägnierenden Zusammensetzung und der wässrigen alkalischen Lösung bildet sich eine Sperrschicht. Darüber trocknet das Mauerwerk aus.

Die erfindungsgemäß verwendete imprägnierende Zusammensetzung kann ein Organoalkoxysilan (A1) oder ein Gemisch mehrerer Organoalkoxysilane enthalten. Die Organoalkoxysilane enthalten mindestens einen und höchstens 3 über SiC-gebundene Kohlenwasserstoffreste und mindestens einen und höchstens 3 Alkoxyreste. Die Herstellung der Organoalkoxysilane ist in W. Noll, 2. Auflage 1968, Verlag Chemie, Weinheim, Kap. 3.3 beschrieben.

Vorzugsweise besitzen die Organoalkoxysilane (A1) 1 oder 2 gleiche oder verschiedene, gegebenenfalls halogensubstituierte, über SiC-gebundene einwertige $C_1$-$C_{15}$-Kohlenwasserstoffreste und die übrigen Reste sind gleiche oder verschiedene $C_1$-$C_6$-Alkoxyreste.

Beispiele für die $C_1$-$C_{15}$-Kohlenwasserstoffreste sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; Aralkylreste, wie der Benzylrest, der alpha- und der $\beta$- Phenylethylrest.

Beispiele für halogensubstituierte $C_1$-$C_{15}$-Kohlenwasserstoffreste sind mit Fluor-, Chlor-, Brom- und Jodatomen substituierte Alkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Besonders bevorzugt sind die nicht substituierten $C_1$-$C_8$-Alkylreste und der Phenylrest.

Beispiele für $C_1$-$C_6$-Alkoxyreste des Organoalkoxysilans (A1) sind der Methoxy-, Ethoxy-, n-Propoxy-, Isopropoxy-, n-Butoxy-, iso-Butoxy-, sec.-Butoxy-, tert.-Butoxyrest; Pentyloxyreste, wie der n-Pentyloxyrest und Hexyloxyreste, wie der n-Hexyloxyrest. Die Methoxy- und Ethoxyreste sind besonders bevorzugt.

Die Alkoxyreste können mit Halogenatomen substituiert sein, jedoch ist dies nicht bevorzugt.

Die erfindungsgemäß verwendete imprägnierende Zusammensetzung kann ein Alkoxygruppen enthaltendes Organosiloxan (A2) oder ein Gemisch mehrerer Organosiloxane enthalten. Die Organosiloxane sind

oligomere oder polymere siliciumorganische Verbindungen, bei denen die Siliciumatome über Sauerstoffatome verknüpft sind und die SiC-gebundene organische Reste enthalten. Die Organosiloxane können zusätzlich Hydroxylgruppen enthalten, die eine Bindung an das Mauerwerk erleichtern.

Die Organosiloxane dürfen eine Viskosität von 2000 $mm^2/s$ nicht überschreiten, da sonst eine gute Verteilung auf den Porenoberflächen im Mauerwerk nicht gewährleistet wäre.

Besonders geeignet sind die beispielsweise in der EP-B-53 223 beschriebenen Organosiloxane (A2) der allgemeinen Formel

$$R_xSi(OR^1)_y(OH)_zO_{\frac{4-x-y-z}{2}}$$

in der R gleiche oder verschiedene einwertige, gegebenenfalls halogensubstituierte, über SiC-gebundene $C_1$-$C_{15}$-Kohlenwasserstoffreste, $R^1$ gleiche oder verschiedene einwertige $C_1$-$C_6$-Alkylreste , x 0, 1, 2 oder 3, durchschnittlich 0,9 bis 1,8, y 0,1, 2 oder 3, durchschnittlich 0,01 bis 2,0 und z 0, 1, 2 oder 3, durchschnittlich 0,0 bis 0,5 bedeutet mit der Maßgabe, daß die Summe von x, y und z höchstens 3,5 beträgt und das Organosiloxan (A2) eine Viskosität von höchstens 300 $mm^2/s$ bei 25°C besitzt.

Organosiloxane (A2) mit Viskositäten von 5 bis 100 $mm^2/s$ sind am meisten bevorzugt.

Beispiele für die $C_1$-$C_{15}$-Kohlenwasserstoffreste sind die vorstehend bei den Organoalkoxysilanen (A1) aufgeführten $C_1$-$C_{15}$-Kohlenwasserstoffreste und halogensubstituierten $C_1$-$C_{15}$-Kohlenwasserstoffreste. Besonders bevorzugt sind die nicht substituierten $C_1$-$C_8$-Alkylreste und der Phenylrest.

Obwohl in der vorstehend aufgeführten Formel nicht aufgeführt, kann ein Teil der Reste R durch direkt an Siliciumatome gebundene Wasserstoffatome ersetzt sein. Dies ist jedoch nicht bevorzugt.

Beispiele für die Reste $R^1$ sind der Methyl-, Ethyl-, n-Propyl-, Isopropyl-, n-Butyl-, sec.-Butyl-, und tert.-Butylrest; Pentylreste, wie der n-Pentylrest und Hexylreste, wie der n- Hexylrest, wobei die Methyl- und Ethylreste besonders bevorzugt sind.

Besonders bevorzugt als Organosiloxane (A2) sind solche, die durch Umsetzung von Methyltrichlorsilan und einem $C_1$-$C_8$-Alkyltrichlorsilan, oder Phenyltrichlorsilan mit Methanol oder Ethanol in Wasser erhältlich sind.

Das Salz (B) und dessen Herstellung ist in der US-A-4,661,551 beschrieben. Bei dem erfindungsgemäßen Verfahren werden vorzugsweise die Salze (B) verwendet, die erhältlich sind aus Polysiloxanen der Formel

$$R^2_aR^3_a(OR^4)Si_cO_{\frac{4-a-b-c}{2}}$$

in der $R^2$ gleiche oder verschiedene einwertige, von basischem Stickstoff freie, über SiC-gebundene $C_1$-$C_{15}$-Kohlenwasserstoffreste oder Wasserstoff, $R^3$ gleiche oder verschiedene einwertige SiC-gebundene Reste mit basischem Stickstoff, $R^4$ Wasserstoff oder gleiche oder verschiedene $C_1$-$C_4$-Alkylreste bedeutet, a 0, 1, 2 oder 3, durchschnittlich 0 bis 2, insbesondere 0 bis 1,8, b 0 oder 1, durchschnittlich 0,1 bis 0,6, insbesondere 0,15 bis 0,30 und c 0, 1, 2 oder 3, durchschnittlich 0,1 bis 0,8, insbesondere 0,2 bis 0,6 ist und die Summe der jeweiligen Durchschnittswerte von a, b und c höchstens 3,4 beträgt. Die Viskosität bei 25°C/Molekulargewicht beträgt 1 bis 2000, vorzugsweise 10 bis 100 $mm^2/s$.

Vorzugsweise ist an jedes Siliciumatom, an das ein Wasserstoff gebunden ist, auch ein Kohlenwasserstoffrest, insbesondere ein Methylrest gebunden.

Beispiele für die $C_1$-$C_{15}$-Kohlenwasserstoffreste für $R^2$ sind die vorstehend bei den Organoalkoxysilanen (A1) aufgeführten $C_1$-$C_{15}$-Kohlenwasserstoffreste. Besonders bevorzugt ist der Methyl- und der Phenylrest.

Als Reste $R^3$ sind solche der Formel

$$R^5_2NR^6-$$

bevorzugt, in der $R^5$ Wasserstoff oder gleiche oder verschiedene $C_1$-$C_{15}$-Alkyl- oder $C_1$-$C_{15}$-Aminoalkylreste und $R^6$ einen zweiwertigen $C_1$-$C_{18}$-Kohlenwasserstoffrest bedeutet.

Die vorstehenden Beispiele für Alkylreste für $R^2$ beziehen sich auch auf $R^5$. Wenn der Rest $R^5$ einen $C_1$-$C_{15}$-Aminoalkylrest bedeutet, trägt dessen Aminogruppe vorzugsweise zwei Wasserstoffatome.

Vorzugsweise ist an jedes Stickstoffatom der vorstehenden Formel mindestens ein Wasserstoffatom gebunden.

Beispiele für zweiwertige Kohlenwasserstoffreste $R^6$ sind gesättigte Alkylenreste wie der Methylen-, und Ethylenrest, sowie Propylen-, Butylen-, Pentylen-, Hexylen-, Cyclohexylen- und Octadecylenreste oder ungesättigte Alkylen- oder Arylenreste wie der Hexenylenrest und Phenylenreste, wobei der n-Propylenrest besonders bevorzugt ist.

Zur Herstellung des Salzes (B) sind alle wasserlöslichen organischen und anorganischen Säuren geeignet, die sich in ihrer Salzform gegenüber den übrigen Bestandteilen der imprägnierenden Zusammensetzung chemisch inert verhalten. Beispiele für derartige Säuren sind Salz-, Schwefel-, Phosphor-, Essig- und Propionsäure. Essigsäure und Propionsäure sind bevorzugt.

Die erfindungsgemäß verwendete imprägnierende Zusammensetzung kann zusätzlich zu (A1) Alkoxysilan und/oder (A2) Organosiloxan und (B) Salz von wasserlöslicher organischer oder anorganischer Säure und

Organopolysiloxan (C) monomere und/oder polymere Kieselsaüreester mit $C_1$-$C_6$-Alkoxyresten und einer Viskosität von höchstens 20 $mm^2/s$ bei 25°C enthalten. Es kann ein bestimmter Kieselsäureester oder ein Gemisch verschiedener Kieselsäureester verwendet werden. Die Herstellung der Kieselsäureester (C) ist in W. Noll, 2. Auflage 1968, Verlag Chemie, Weinheim, Kap. 11 beschrieben.

Bevorzugte Kieselsäureester enthalten $C_1$-$C_3$-Alkoxyreste und weisen eine Viskosität von 1 bis 5 $mm^2/s$ bei 25°C auf.

Beispiele bevorzugter Kieselsäureester sind Tetramethylsilikat, Tetraethylsilikat und Tetraisopropylsilikat.

Die erfindungsgemäß verwendeten imprägnierenden Zusammensetzungen enthalten vorzugsweise 20 bis 80 Gew.-%, insbesondere 35 bis 55 Gew.-% Organoalkoxysilan (A1), bezogen auf die unverdünnte Zusammensetzung.

Die bevorzugten Mengen an Organosiloxan (A2) betragen in den Zusammensetzungen 5 bis 80 Gew.-%, insbesondere 10 bis 30 Gew.-%, bezogen auf die unverdünnte Zusammensetzung.

Das Gewichtsverhältnis von Alkylalkoxysilan (A1) zu Organosiloxan (A2) kann in den unverdünnten Zusammensetzungen von 0:1 bis 1:0 reichen, beträgt aber vorzugsweise 2:1 bis 10:1.

Die erfindungsgemäß verwendeten imprägnierenden Zusammensetzungen enthalten vorzugsweise 5 bis 50 Gew.-%, insbesondere 15 bis 30 Gew.-% Salz (B), bezogen auf die unverdünnte Zusammensetzung.

Wenn die erfindungsgemäß verwendeten imprägnierenden Zusammensetzungen zusätzlich Kieselsäureester (C) enthalten, beträgt deren Menge höchstens 30 Gew-%, vorzugsweise 5 bis 15 Gew.-%, bezogen auf die unverdünnte Zusammensetzung.

Die imprägnierenden Zusammensetzungen werden im erfindungsgemäßen Verfahren im Gewichtsverhältnis 1:4 bis 1:30, vorzugsweise 1:11 bis 1:14 mit Wasser verdünnt und in hochdispergierter Form eingesetzt. Die imprägnierenden Zusammensetzungen ergeben beim Verdünnen mit Wasser durchsichtige Gemische.

Die imprägnierenden Zusammensetzungen können zusätzlich zu den vorstehend beschriebenen Bestandteilen als Zusatzstoffe Fungizide, Bakterizide, Algicide, Mikrobicide, Geruchsstoffe, Korrosionsinhibitoren und Entschäumer enthalten. Die unverdünnten imprägnierenden Zusammensetzungen enthalten Zusatzstoffe jeweils vorzugsweise in Mengen von 0,001 bis 1 Gew.-%, insbesondere von 0,01 bis 0,1 Gew.-%.

In den nachfolgenden Beispielen sind, falls jeweils nicht anders angegeben,

a) alle Mengenangaben auf das Gewicht bezogen;

b) alle Drücke 0,10 MPa (abs.);

c) alle Temperaturen 25°C .

Beispiele

**Herstellung des Organosiloxans (A2)**

In einer kontinuierlich arbeitenden Umsetzungsanlage wurde ein Gemisch aus 2 Gew.-Teilen Methyltrichlorsilan und 1 Gew.-Teil i-Octyltrichlorsilan mit einem Gemisch aus 1 Gew.-Teil Wasser und 2 Gew.-Teilen Methanol derart in Reaktion gebracht, daß ein Hydrolysat mit einer Viskosität von 14 $mm^2/s$ erhalten wurde.

**Herstellung des Salzes (B)**

In einem 1l-Dreihalskolben mit Rührer, Tropftrichter und Rückflußkühler wurden unter Rühren zu einem Gemisch aus 0,2 g KOH in 4 g Methanol und 500 g des Organopolysiloxans der Summenformel

$$CH_3Si(OC_2H_5)_{0,8}O_{1,1}$$

mit einem durchschnittlichen Molekulargewicht von etwa 600 g/Mol und einer Viskosität von etwa 20 $mm^2/s$ 150 g N-(2-Aminoethyl)-3-aminopropyltrimethoxysilan gegeben und das so erhaltene Gemisch 6 Stunden zum Sieden unter Rückfluß erwärmt. Anschließend wurde auf 30°C gekühlt und mit 2,5 ml 10%-iger Salzsäure vermischt. Durch Erwärmen auf bis zu 140°C wurde schließlich das Methanol abdestilliert und das so erhaltene Salz (B) von KCl durch Filtrieren befreit. Das Salz (B) enthielt 2,9 % basischen Stickstoff, bezogen auf sein Gewicht.

**Herstellung der gesättigten Calciumhydroxidlösung**

Kalkhydrat oder Löschkalk wird in Wasser dispergiert. Die nach 24 Stunden überstehende klare wäßrige Lösung wird dekantiert und im erfindungsgemäßen Verfahren verwendet.

**Herstellung der imprägnierenden Zusammensetzung**

24,2 Gew.-Teile des vorstehend beschriebenen Salzes (B) wurden nacheinander mit 6 Gew.-Teilen Eisessig, 45,6 Gew-Teilen Isooctyltrimethoxysilan, 13,8 Gew.-Teilen Tetraethylsilikat und 10,4 Gew.-Teilen des vorstehend beschriebenen Organosiloxans (A2) vermischt und 5 Stunden auf 90°C erwärmt, wobei sich eine klare Lösung bildete. Nach dem Abkühlen wurde die erhaltene imprägnierende Zusammensetzung entsprechend den Angaben in den nachstehenden Beispielen mit Wasser verdünnt. Man erhielt hochdisperse, durchsichtige Gemische.

**Beispiel 1**

Gebrannte Ziegel mit den Abmessungen 24 x 12 x 7,5 cm und einem Durchschnittsgewicht von 4091 g, sowie mit einem maximalen Wasseraufnahmevermögen von 18,9 Gew.-% wurden für 3 Tage einerseits in Wasser (Serie a) und andererseits in eine gesättigte Calciumhydroxidlösung (Serie b) gelagert, dann zur oberflächlichen Ablüftung für 4 Stunden bei Raumtemperatur einzeln aufgestellt. Dann wurden die Ziegel beider Versuchsreihen mit der Kopfseite (unter Kopfseite versteht man die beiden Schmalseiten des Ziegels, d.h. 12 x 7,5 cm) für 24 Stunden 1 cm tief in die vorstehend hergestellte imprägnierende Zusammensetzung , 1:11 mit Wasser verdünnt, eingestellt.

Nach dem Abwiegen wurden die Ziegel beider Versuchsreihen sofort mit der gleichen Seite 1 cm tief in Wasser gestellt. Die Gewichtsänderung der Ziegel wurde durch wöchentliches Abwiegen verfolgt und der in Tabelle I aufgeführte Wassergehalt berechnet.

Tabelle I: Wassergehalt der Ziegel in Gramm

| Ziegel | Anfangsgehalt | 1 Wo. | 2 Wo. | 3 Wo. | 4 Wo. | 5 Wo. |
|---|---|---|---|---|---|---|
| Serie a | 591,4 | 609,2 | 618,3 | 629,9 | 634,5 | 636,6 |
| Serie b | 508,4 | 150,4 | 86,5 | 68,8 | 67,5 | 66,8 |

Der Anfangsgehalt an Wasser wurde als Differenz des Ziegelgewichts nach 24-stündigem Einstellen der Ziegel in die verdünnte imprägnierende Zusammensetzung und des Ziegelgewichts vor dem Versuch berechnet.

**Beispiel 2**

Gebrannte Ziegel mit den gleichen Abmessungen wie die Ziegel aus Beispiel 1 mit einem maximalen Wasseraufnahmevermögen von 6,7 Gew.-% wurden für 3 Tage in Wasser gelagert und nach 4-stündigem Ablüften bei Raumtemperatur für 24 Stunden 1 cm tief mit der Kopfseite in die vorstehend hergestellte imprägnierende Zusammmensetzung, 1:9 mit Wasser verdünnt, eingestellt.

Nach dem Abwiegen wurden die Ziegel in zwei Serien unterteilt. Serie a wurde mit der behandelten Seite 1 cm tief in Leitungswasser und die Serie b mit der behandelten Seite 1 cm tief in eine gesättigte Calciumhydroxidlösung gestellt. Die Gewichtsänderung der Ziegel wurde durch wöchentliches Abwiegen verfolgt und der in Tabelle II aufgeführte Wassergehalt berechnet.

Tabelle II: Wassergehalt der Ziegel in Gramm

| Ziegel | $A^1$ | 1 Wo. | 2 Wo. | 3 Wo. | 4 Wo. | 5 Wo. | 6 Wo. | 7 Wo. |
|---|---|---|---|---|---|---|---|---|
| Serie a | 247,1 | 253,8 | 256,4 | 261,4 | 264,0 | 267,3 | 272,1 | 273,2 |
| Serie b | 239,0 | 243,7 | 259,7 | 251,7 | 243,2 | 43,7 | 31,0 | 25,0 |

$A^1$: Der Anfangsgehalt an Wasser wurde als Differenz des Ziegelgewichts nach 24-stündigem Einstellen der Ziegel in die verdünnte imprägnierende Zusammensetzung und des Ziegelgewichts vor dem Versuch berechnet.

**Patentansprüche**

1. Verfahren zur wasserabweisenden Imprägnierung von Mauerwerk durch Behandeln des Mauerwerks mit einer hochdispersen, mit Wasser verdünnten imprägnierenden Zusammensetzung, die (A1) Organoalkoxysilan und/oder (A2) Alkoxygruppen enthaltendes Organosiloxan und (B) Salz von wasserlöslicher organischer oder anorganischer Säure und Organopolysiloxan umfaßt, das zusätzlich zu anderen Organosiloxaneinheiten solche Siloxaneinheiten enthält, die einwertige, über SiC-gebundene Reste mit basischem Stickstoff in Mengen von mindestens 0,5 Gew.-% basischem Stickstoff, bezogen auf das Gewicht des Organopolysiloxans aufweisen,
dadurch gekennzeichnet, daß das Mauerwerk mit wässrigen Alkali- oder Erdalkalihydroxidlösungen alkalisch gemacht wird.

2. Verfahren nach Anspruch 1, wobei das Mauerverk mit einer wässrigen Calciumhydroxidlösung alkalisch gemacht wird.

3. Verfahren nach einem der Ansprüche 1 bis 2, wobei im Mauerwerk aufsteigende Feuchtigkeit bekämpft wird.

4. Verfahren nach einem der Ansprüche 1 bis 3, wobei die wässrige alkalische Lösung über Bohrlöcher in das Mauerwerk eingebracht wird.

5. Verfahren nach einem der Ansprüche 1 bis 4, wobei eine imprägnierende Zusammensetzung, 20 bis 80 Gew.-% Organoalkoxysilan (A1) enthält.

6. Verfahren nach einem der Ansprüche 1 bis 5, wobei das Organoalkoxysilan (A1) 1 oder 2 gleiche oder verschiedene, gegebenenfalls halogensubstituierte, über SiC-gebundene einwertige $C_1$-$C_{15}$-Kohlenwasserstoffreste besitzt und die übrigen Reste gleiche oder verschiedene $C_1$-$C_6$-Alkoxyreste darstellen.

7. Verfahren nach einem der Ansprüche 1 bis 6, wobei eine imprägnierende Zusammensetzung verwendet wird, die, bezogen auf die unverdünnte Zusammensetzung, 5 bis 50 Gew.-% Salz (B) enthält.

8. Verfahren nach einem der Ansprüche 1 bis 7, wobei die unverdünnte imprägnierende Zusammensetzung 5 bis 80 Gew.-% Organosiloxan (A2) enthält.

9. Verfahren nach einem der Ansprüche 1 bis 8, wobei das Organosiloxan (A2) die allgemeine Formel

$$R_xSi(OR^1)_y(OH)_zO_{\frac{4-x-y-z}{2}}$$

besitzt, in der R gleiche oder verschiedene einwertige, gegebenenfalls halogensubstituierte, über SiC-gebundene $C_1$-$C_{15}$-Kohlenwasserstoffreste, $R^1$ gleiche oder verschiedene einwertige $C_1$-$C_6$-Alkylreste ,

x 0, 1, 2 oder 3, durchschnittlich 0,9 bis 1,8, y 0,1 2, oder 3, durchschnittlich 0,01 bis 2,0 und z 0, 1, 2 oder 3, durchschnittlich 0,0 bis 0,5 bedeutet, mit der Maßgabe, daß die Summe von x, y und z höchstens 3,5 beträgt und das Organosiloxan (A2) eine Viskosität von höchstens 300 mm²/s bei 25°C besitzt.

10. Verfahren nach einem der Ansprüche 1 bis 9, wobei die imprägnierende Zusammensetzung zusätzlich (C) monomere und/oder polymere Kieselsäureester mit $C_1$-$C_6$-Alkoxyresten und einer Viskosität von höchstens 20 mm²/s bei 25°C enthält.

## Claims

1. Process for water-repellent impregnation of masonry by treating the masonry with a highly disperse, water-diluted impregnating composition which comprises (A1) an organoalkoxysilane and/or (A2) an organosiloxane containing alkoxy groups and (B) a salt of a water-soluble organic or inorganic acid and an organopolysiloxane, which in addition to other organosiloxane units contains those siloxane units which carry monovalent SiC-bonded radicals containing basic nitrogen in amounts of at least 0.5 % by weight of basic nitrogen, based on the weight of the organopolysiloxane, characterised in that the masonry is rendered alkaline with an aqueous alkali metal hydroxide solution or alkaline earth metal hydroxide solution.

2. Process according to Claim 1, the masonry being rendered alkaline with an aqueous calcium hydroxide solution.

3. Process according to either of Claims 1 and 2, damp rising in the masonry being combated.

4. Process according to any of Claims 1 to 3, the aqueous alkaline solution being introduced into the masonry via boreholes.

5. Process according to any of Claims 1 to 4, an undiluted impregnating composition being used which, based on the undiluted composition, contains 20 to 80 % by weight of organoalkoxysilane (A1).

6. Process according to any of Claims 1 to 5, the organoalkoxysilane (A1) having 1 or 2 identical or different, optionally halogen-substituted SiC-bonded monovalent $C_1$-$C_{15}$-hydrocarbon radicals and the other radicals representing identical or different $C_1$-$C_6$-alkoxy radicals.

7. Process according to any of Claims 1 to 6, an impregnating composition being used which, based on the undiluted composition, contains 5 to 50 % by weight of salt (B).

8. Process according to any of Claims 1 to 7, the undiluted impregnating composition containing 5 to 80 % by weight of organosiloxane (A2).

9. Process according to any of Claims 1 to 8, the organosiloxane (A2) having the general formula

$$R_xSi(OR^1)_y(OH)_zO_{\frac{4-x-y-z}{2}}$$

in which R denotes identical or different monovalent, optionally halogen-substituted, SiC-bonded $C_1$-$C_{15}$-hydrocarbon radicals, $R^1$ denotes identical or different monovalent $C_1$-$C_6$-alkyl radicals, x denotes 0, 1, 2 or 3, on average 0.9 to 1.8, y denotes 0, 1, 2 or 3, on average 0.01 to 2.0, and z denotes 0, 1, 2 or 3, on average 0.0 to 0.5, with the proviso that the sum of x, y and z is not more than 3.5 and the organosiloxane (A2) having a viscosity of not more than 300 mm²/s at 25°C.

10. Process according to any of Claims 1 to 9, the impregnating composition additionally containing (C) monomeric and/or polymeric silicic acid esters having $C_1$-$C_6$-alkoxy radicals and a viscosity of not more than 20 mm²/s at 25°C.

## Revendications

1. Procédé pour l'imprégnation hydrofugeante des maçonneries par traitement de la maçonnerie avec une composition d'imprégnation fortement dispersée, diluée avec de l'eau, qui comprend un organoalcoxysilane (A1) et/ou un organosiloxane (A2) contenant des groupes alcoxy, et un sel (B) d'un acide organique

ou minéral soluble dans l'eau et d'un polyorganosiloxane, qui contient en plus des motifs organosiloxane des motifs siloxane qui présentent des radicaux monovalents, liés par des groupes SiC, contenant de l'azote basique, à raison d'au moins 0,5 % en poids d'azote basique par rapport au poids du polyorganosiloxane, caractérisé en ce que la maçonnerie est alcalinisée avec des solutions aqueuses d'hydroxydes alcalins ou alcalino-terreux.

**2.** Procédé selon la revendication 1, dans lequel la maçonnerie est alcalinisée avec une solution aqueuse d'hydroxyde de calcium.

**3.** Procédé selon l'une des revendications 1 à 2, caractérisé en ce qu'on lutte contre l'humidité montant dans la maçonnerie.

**4.** Procédé selon l'une des revendications 1 à 3, dans lequel la solution alcaline aqueuse est introduite dans la maçonnerie par des trous.

**5.** Procédé selon l'une des revendications 1 à 4, dans lequel on utilise une composition d'imprégnation qui contient, par rapport à la composition non diluée, 20 à 80 % en poids d'organoalcoxysilane (A1).

**6.** Procédé selon l'une des revendications 1 à 5, dans lequel l'organoalcoxysilane (A1) possède 1 ou 2 radicaux hydrocarbure en $C_1$-$C_{15}$ monovalents, identiques ou différents, substitués le cas échéant par des halogènes, liés par des groupes SiC et les autres radicaux sont des radicaux alcoxy en $C_1$-$C_6$ identiques ou différents.

**7.** Procédé selon l'une des revendications 1 à 6, dans lequel on utilise une composition d'imprégnation qui contient, par rapport à la composition non diluée, 5 à 50 % en poids de sel (B).

**8.** Procédé selon l'une des revendications 1 à 7, dans lequel la composition d'impréglation non diluée contient 5 à 80 % en poids d'organosiloxane (A2).

**9.** Procédé selon l'une des revendications 1 à 8, dans lequel l'organosiloxane (A2) possède la formule générale :

$$R_xSi(OR^1)_y(OH)_zO_{\frac{4-x-y-z}{2}}$$

dans laquelle R désigne des radicaux hydrocarbure en $C_1$-$C_{15}$ identiques ou différents, monovalents, substitués le cas échéant par des halogènes, liés par des groupes SiC, $R^1$ désigne des radicaux alkyle en $C_1$-$C_6$ monovalents identiques ou différents, x est 0, 1, 2 ou 3, en moyenne 0,9 à 1,8, y est 0, 1, 2 ou 3, en moyenne 0,01 à 2,0 et z est 0, 1, 2 ou 3, en moyenne 0,0 à 0,5, sous réserve que la somme de x, y et z est de 3,5 au maximum et que l'organosiloxane (A2) possède une viscosité maximale de 300 $mm^2/s$ à 25 °C.

**10.** Procédé selon l'une des revendications 1 et 9, dans lequel la composition d'imprégnation contient en outre (C) des esters siliciques monomères ou polymères avec des radicaux alcoxy en $C_1$-$C_6$ et ayant une viscosité maximale de 20 $mm^2/s$ à 25 °C.